# EUROPEAN PATENT SPECIFICATION

(11) **EP 2 113 430 B1**
(45) Date of publication and mention of the grant of the patent: **04.04.2012**
(21) Application number: 09461509.3
(22) Date of filing: 29.04.2009
(51) Int. Cl.: B60R 21/239

(54) **Controlled valve to be used in gas bags in particular**
Regelventil, das insbesondere in Gasbeuteln verwendet werden soll
Valve commandée utilisée dans des sacs de gaz

(30) Priority: 02.05.2008 PL 38508608
(43) Date of publication of application: 04.11.2009
(73) Proprietor: Adaptronica Sp. z.o.o., 05-095 Lomianki (PL)
(72) Inventor: Ostrowski, Marian, 02-904, Warszawa (PL); Graczykowski, Cezary, 01-684, Warszawa (PL); Pawlowski, Piotr Krzysztof, 01-684, Warszawa (PL)
(74) Representative: Belz, Anna

(56) References cited:
- EP-A- 1 834 848
- WO-A-2007/115818
- DE-A1- 10 059 956
- JP-A- 2007 210 500

## Description

The subject of the invention is a drivable semi-active valve, which is in particular to be used as controlled discharge valve for an airbag system.

In some existing solutions, like the inflatable gas bags used for impact mitigation, the use of controlled discharge valve is needed. The most important features of the discharge valve are the compact design, low inertia of moving parts, low total mass, short activation times and sufficiently large medium flow rate. A proportional control of medium outflow is often too complex, so that a double-state valves are used, allowing a change of state from closed to open or from open to closed, usually once during the total process duration.

In the process of energy dissipation of an impact it is desirable to perform three consecutive actions, i.e. to keep the valve closed at the beginning of the process, then to perform a controlled release of fluid by keeping the valve opened for some time in the second step and finally to close the valve again.

Patent US6705642B1 discloses a solution allowing for controlled opening of the gas outflow from an airbag realized through the removal of mechanical connections in the fabric structure of the airbag. The discharge part has the form of structural connection based on the way of operation of a zip fastener, controlled by the removal of a tie thread. This solution cannot be used for closing the already initiated flow.

Patent applications EP 0423981A and US 6273463 describe the non-controlled discharge valves for the airbags, whose opening is driven by the gas pressure acting on a thin-walled, elastic membrane. Exceeding the threshold of internal pressure causes a gradual rise of the membrane leading to an increase in the outflow of gas. This group of the valves cannot control the process of flow of the fluid.

Patent applications EP 0592879A1, US 5709405, US 6899134 disclose solutions of controlled discharge valves, in which the control of gas flow is achieved by the interaction of movements of elements with shaped flow channels. In the closed state the elements of the valve diaphragm are blocking the fluid flow. The forced relocation of the diaphragm causes opening of the gas flow in the channels. The described group of solutions is characterized by relatively large mass, non-compact design and probably large activation times.

Patent application WO 2007115818A1 describes a single-state valve in the form of a thin-walled fabric shell, whose edge is constrained by a tie cord, causing the gas flow to cease. The valve is not externally controlled. The tightening of the shell is self-initiated by the movement of the airbag surface.

Patent applications GB 2350332A, US 6802529 disclose the design of non-return valves made of fabric shells. The valves have the form of ellipsoidal tube, which is being deformed under the change of flow direction causing the flow to cease.

Patent application EP 1834848 A2 describes an airbag comprising an inflatable cushion having a vent hole and the cushion provided with a device including a part made of flexible material with at least one hole which is fixed to the inside of the inflatable cushion in the periphery of the vent hole and has a surface that is greater than the surface of the cushion delimited by the fixing points of the part, and which incorporates means allowing the separation thereof from the cushion.

The existing structures, examples of which are mentioned above, do not include solutions that ensure a suitably rapid opening and closing of the discharge valves, which is necessary for performing the optimal control strategy for an airbag. Currently used controlled proportional valves are usually characterized by small possible outflow, large total mass and large inertia of the moving parts. The family of the high speed, single step discharge valves, does not enable optimal control of the process of airbag compression.

The aim of this invention is to propose a solution of a light, high-performance valve allowing for controlled opening and then closing of the flow.

The essence of the invention is that the drivable valve, for the gas bag in particular, has an inner deformable shell, one-sidedly closed on the outflow side, which is placed inside an outer shell and being equipped with tightening parts in the middle area. The method for controlling the level of flow is that reduction or elimination of the structural connection of the tightening element causes the deformable inner shell to be pressed against the outer shell of the valve, by the pressure of the flowing fluid.

To control the opening or closing of the valve the pressure of the flowing fluid is used. Also the movement of operating elements and generation of contact forces during the closing process are caused by the fluid pressure. Operation of the valve is initiated by reduction or elimination of the structural connection of the tightening part.

The drivable valve having a deformable shell at an outlet opening and a tightening element, comprises:
a valve head made of rigid or elastic material, having two element of approximate form of a ring, an external head ring and internal head ring, connected to each other by coupling links;
an external shell, approximately axis-symmetric, opened on both inflow and outflow sides, fixed to the external head ring; and
a deformable internal shell having the approximate form of an axis-symmetric bag, opened from the valve head side and closed from the opposite side, placed inside the external shell and fixed to the internal head ring, wherein the internal shell is divided, in an inactive state, into two volumes, first volume being closed on the outflow side, and second volume being opened on the inflow side, while the middle part of the internal shell is equipped with an internal tightening element that applies a clamping force to the shell.

It is preferable that the tightening elements have the forms of rings.

The controlled tightening ring is a part of the inner or outer shell in order to prevent their radial movements. The reduction or elimination of the clamping force in the ring, initiated by a control signal, makes the valve start working. The shells of the valve may be made of extensible as well as non-extensible materials.

The presence of the pressure equalization pipe is optional and depends on the character of the flow.

The valve according to the invention allows for two-stage fluid flow control. In the inactive state, the controlled clamping rings are tightened to block the flow of the fluid. The opening of the flow is caused by controlled removal of the external clamping ring. Outflow of the fluid that has passed through the head channels takes place in between the external and internal shells.

The closure of the valve is realized by the controlled removal of the internal clamping ring. The internal pressure in an airbag causes the internal shell of the valve to adhere to the external one, by which the flow of fluid gets blocked and the valve is closed.

Removal of the controlled rings may be carried out by the use of pyrotechnical, electro-thermal, thermal, pneumatic, hydraulic, electromagnetic or other elements, which accordingly results in e.g. the cut of a tightening belt, destruction of a joining element, slipping out of a bolt in order to trigger movement of a rigid or elastic clamping part.

The implementation examples of the invention have been clarified in the attached figures, where Fig.1 shows the valve at the initial state in the longitudinal cross-section (the arrows point out the fluid pressure action); Fig. 2 -closed valve in the top view; Fig. 3. -closed valve in the isometric view; Fig. 4 - opened valve in the longitudinal cross-section (the arrows indicate the direction of fluid flow); Fig. 5 -opened valve in the isometric view; Fig. 6 - closed valve at the final state in the longitudinal cross-section (the arrows point out the action of the pressure); Fig. 7 - closed valve at the final state in the isometric view; Fig. 8 - the scheme of the gas bag system equipped with the valve according to the invention.

The following examples illustrate the invention without preventing its scope. The drivable valve presented in the figures consists of the head made of rigid or elastic material including the external head ring 1 and internal head ring 2 which are connected by three fasteners 5, the axi-symmetric external shell 3, clamped at the inactive state by the controlled external clamping ring 6, the axi-symmetric internal shell 4 divided into two volumes first closed on the outflow side and second opened on the inflow side, connected by the pressure equalizing tube 8, and the said internal shell 4 tightened in the middle part by the controlled internal clamping ring 7 that applies a clamping force to the shell.

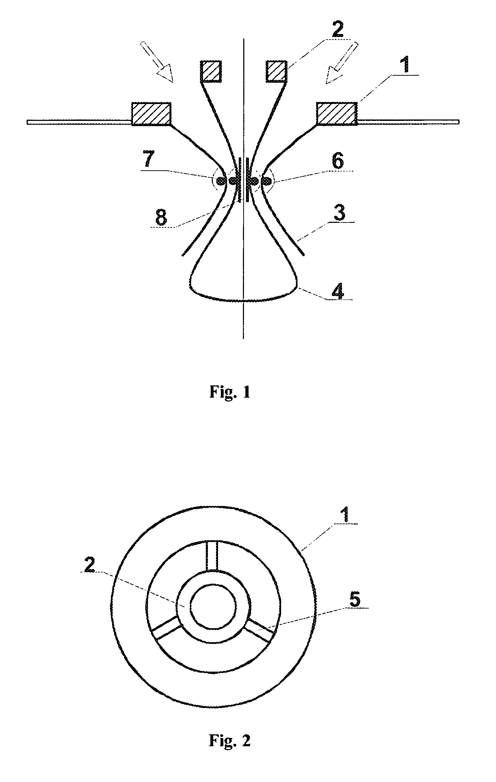

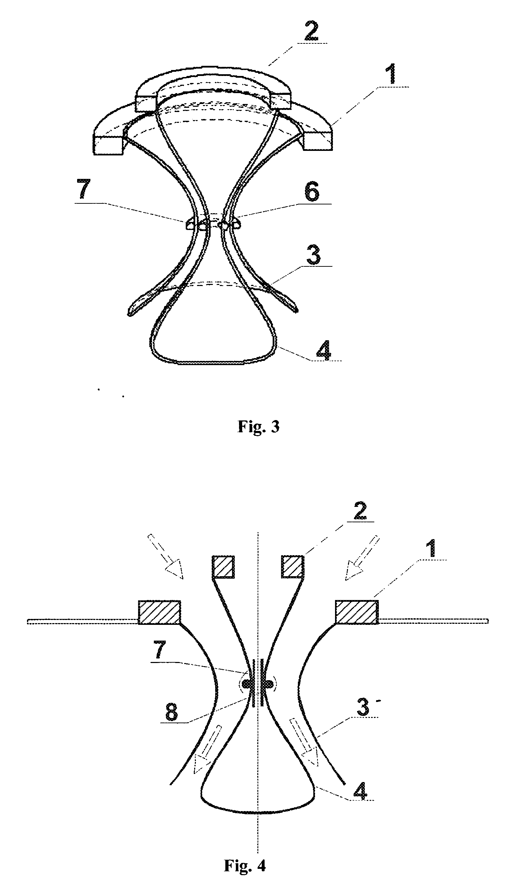

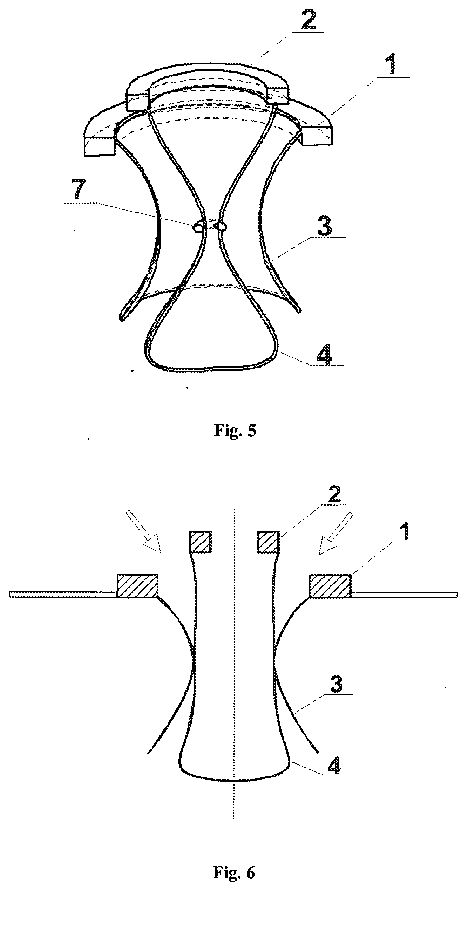

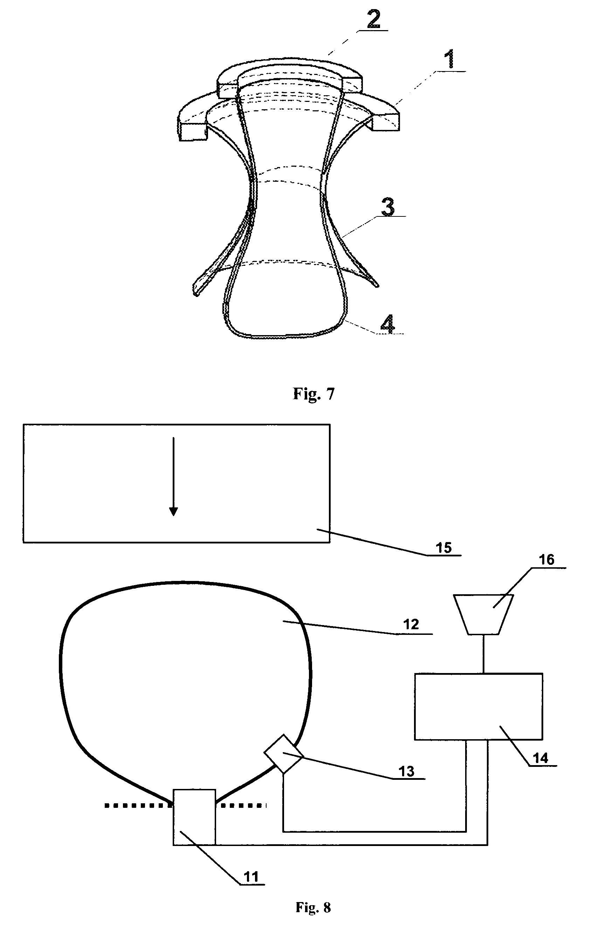

The valve at the initial state is shown in Fig. 1. The opened state is presented in Fig.4, while the closed final state in Fig. 6. An application of the valve controlling the outflow from a gasbag is presented in Fig. 8. The impact absorption gasbag consists of the pyrotechnic gas generator (the inflator) 11 used for fast inflation of the bag, the bag shell 12 made of fabric, the discharge valve or valves according to the invention 13, placed in the side part of the bag shell or in the inflator head 11. The control system 14 is equipped with the set of sensors 16. The object 15 hits the gas bag with an initial velocity. The kinetic energy of the object is to be fully dissipated by the gas bag.

As soon as the controller 14 has detected high risk of an impact, the inflator 11 is activated and the gas generating material starts to deflagrate. The produced gas fills the internal volume of the bag shell 12 with overpressure compared to the external pressure, causing deployment and tension of the bag shell. The impacting object 15 deforms the bag shell 12 causing an increase of the internal pressure. In a suitable moment, the controller 14 sends a signal to open the controlled discharge valve 13, causing an increased outflow of the gas from the internal volume of the bag shell 12. At a further stage of the crushing process, a signal is sent to close the valve 13, causing the gas outflow from the cavity of the bag shell 12 to cease. The use of the said valve improves the impact characteristics by minimizing the impact forces acting on the object 15.

## Claims

1. A drivable valve, to be used in a gas bag in particular, having a deformable shell at an outlet opening and a tightening element, **characterized in that** it consists of:
- a valve head made of rigid or elastic material, having two elements of approximate form of a ring, an external head ring (1) and an internal head ring (2), connected to each other by coupling links (5),
- an external shell (3), approximately axis-symmetric, opened on both inflow and outflow sides, fixed to the external head ring (1),
- a deformable internal shell (4) having the approximate form of an axis-symmetric bag, opened from the valve head side and closed from the opposite side, placed inside the external shell (3) and fixed to the internal head ring (2). wherein the internal shell (4) is divided in an inactive state into two volumes, first volume being closed on the outflow side, and second volume being opened on the inflow side, while the middle part of the internal shell (4) is equipped with an internal tightening element (7) that applies a clamping force to the shell (4).

2. The valve as per claim 1, wherein the external shell (3) is equipped with an external tightening element (6).

3. The valve as per claim 1, wherein a pressure equalization pipe (8) connecting the two volumes of the shell is located inside the shell (4).

4. The valve as per claim 1 and 3, wherein the tightening elements (6,7) have the form of rings.

5. The valve as per claim 1, 2, and 4 wherein the tightening elements (6,7) are eliminated by electrical control signal with the use of mechanical, pyrotechnical, electro-thermal, thermal, pneumatic, hydraulic or electromagnetic elements.

6. The valve as per claim 1, 2, and 4 wherein the tightening elements (6,7) are capable of reducing the clamping force by electrical control signal with the use of mechanical, pyrotechnical, electro-thermal, thermal, pneumatic, hydraulic or electromagnetic elements.

## Patentansprüche

1. Steuerbares Ventil insbesondere für ein Gaskissen, das am Öffnungsauslauf eine nachgiebige Hülle und ein Klemmelement aufweist, **dadurch gekennzeichnet, dass** es aus:
- einem aus steifem oder elastischem Material gefertigten Kopf, der mit zwei ringähnlichen Elementen, einem äußeren (1) und einem inneren (2), versehen ist, die miteinander mit Hilfe von Verbindungselementen (5) verbunden werden,
- einer äußeren Hülle (3), deren Form der axial symmetrischen angenähert ist und die auf der Einlauf- und Auslaufseite geöffnet ist und am äußeren Kopfring (1) befestigt wird,
- einer verformbaren inneren Hülle (4), deren Form der axial symmetrischen angenähert ist und welche von der Einlaufseite geöffnet und von der Gegenseite geschlossen, innerhalb der äußeren Hülle (3) angeordnet und am inneren Kopfring (2) befestigt wird, wobei sich die innere Hülle (4) im inaktiven Status in zwei Kammern, die erste, welche auf der Auslaufseite geschlossen und die zweite, welche auf der Einlaufseite geöffnet ist, teilt und der mittlere Teil der inneren Hülle (4) mit einem internen Klemmelement (7) versehen ist, welches eine Einschnürung der Hülle (4) bildet,
zusammengesetzt ist.

2. Das Ventil nach dem Anspruch 1, **dadurch gekennzeichnet, dass** die äußere Hülle (3) mit einem äußeren Klemmelement (6) versehen ist.

3. Das Ventil nach dem Anspruch 1, **dadurch gekennzeichnet, dass** das Luftdruckausgleichsröhrchen (8), welches zum Verbinden von zwei Kammern der Hülle dient, innerhalb der Hülle (4) angeordnet ist.

4. Das Ventil nach dem Anspruch 1 und 3, **dadurch gekennzeichnet, dass** die Klemmelemente (6, 7) ringförmig sind.

5. Das Ventil nach dem Anspruch 1, 2 und 4, **dadurch gekennzeichnet, dass** die Klemmelemente (6, 7) unter Einwirkung des elektrischen Steuersignals unter Beteiligung von mechanische, pyrotechnischen, elektrothermischen, thermischen, pneumatischen, hydraulischen beziehungsweise elektromagnetischen Elementen beseitigt sind.

6. Das Ventil nach dem Anspruch 1, 2 und 4, **dadurch gekennzeichnet, dass** die Klemmkraft der Klemmelemente (6, 7) unter Einwirkung des elektrischen Steuersignals unter Beteiligung von mechanischen, pyrotechnischen, elektrothermischen, thermischen, pneumatischen, hydraulischen beziehungsweise elektromagnetischen Elementen reduziert wird.

## Revendications

1. Une valve commandée, en particulier pour le coussin à gaz, ayant une enveloppe flexible sur le trou de sortie et un élément de serrage, **caractérisé en** te qu'elle comprend:
- une tête en matériau rigide ou souple ayant deux éléments en forme semblable à des anneaux: extérieur (1) et intérieur (2), assemblés l'un au l'autre par des éléments de liaison (5),
- une enveloppe extérieure (3) avec une forme similaire à l'axisymétrique, ouverte du côté d'entrée et de sortie, montée à l'anneau extérieur de la tête (1),
- une enveloppe déformable intérieure (4), avec une forme similaire à l'axisymétrique, ouverte du côté de la tête et fermé sur le côté opposé, placée à l'intérieur de l'enveloppe extérieure (3) et fixée à l'anneau intérieur de la tête (2), l'enveloppe intérieure (4) étante divisée dans un état inactif en deux chambres, la première fermée du côté de sortie, et l'autre ouverte sur le côté d'entrée, et la partie centrale de l'enveloppe intérieure (4) est équipé d'un élément de serrage interne (7) qui crée un étranglement de l'enveloppe (4).

2. La valve selon la revendication 1, où l'enveloppe externe (3) est équipé d'un élément de serrage externe (6).

3. La valve selon la revendication 1, où le tube d'équilibrage de pression (8), raccordant les deux chambres de l'enveloppe est placée à l'intérieur de cette enveloppe (4).

4. La valve selon la revendication 1 ou 3, dans lequel les éléments de serrage (6, 7) ont la forme des anneaux.

5. La valve selon la revendication 1, 2 ou 4, où les éléments de serrage (6, 7) sont retirés par l'action d'un signal électrique de commande avec participation des éléments mécaniques, pyrotechniques, électrothermiques, pneumatiques, hydrauliques ou électromagnétiques.

6. La valve selon la revendication 1, 2 ou 4, où les éléments de serrage (6, 7) réduire sa force de serrage par l'action d'un signal électrique de commande avec participation des éléments mécaniques, pyrotechniques, électrothermiques, pneumatiques, hydrauliques ou électromagnétiques.
